# EUROPÄISCHE PATENTSCHRIFT

(11) **EP 3 117 080 B1**
(45) Veröffentlichungstag und Bekanntmachung des Hinweises auf die Patenterteilung: **13.03.2019**
(21) Anmeldenummer: 15741815.3
(22) Anmeldetag: 25.03.2015
(51) Int. Cl.: F01N 3/20, F02D 19/06, F02C 3/22, F02C 3/30, F02B 43/10

(54) **VERFAHREN ZUR ABGASNACHBEHANDLUNG SOWIE VERBRENNUNGSSYSTEM**
METHOD FOR EXHAUST GAS AFTERTREATMENT AND COMBUSTION SYSTEM
PROCÉDÉ DE POST-TRAITEMENT DE FUMÉES ET SYSTÈME DE COMBUSTION

(30) Priorität: 23.04.2014 DE 102014207641
(43) Veröffentlichungstag der Anmeldung: 18.01.2017
(73) Patentinhaber: Siemens Aktiengesellschaft, 80333 München (DE)
(72) Erfinder: WOLF, Erik, 91341 Röttenbach (DE); SIGLING, Ralf, 91083 Baiersdorf (DE); STIESDAL, Henrik, 5000 Odense C (DK)
(86) Internationale Anmeldenummer: PCT/EP2015/056333
(87) Internationale Veröffentlichungsnummer: WO 2015/161972

(56) Entgegenhaltungen:
- FR-A1- 2 839 340
- FR-A1- 2 941 499
- JP-A- 2009 097 419
- US-A1- 2011 283 959
- US-B2- 8 025 033

## Beschreibung

Die Erfindung betrifft ein Verfahren zur Abgasnachbehandlung, bei dem ein nachzubehandelndes Abgas, das bei einer Verbrennung eines Brennmittels entsteht, mit einem Reduktionsmittel behandelt wird.

Ferner betrifft die Erfindung ein Verbrennungssystem mit einer Brennkammer, in der ein Brennmittel verbrennbar ist, einem Speicher, aus dem die Brennkammer mit einem Bestandteil des Brennmittels versorgbar ist, sowie einer Reduktionskammer.

Die Erfindung betrifft außerdem eine Verwendung eines Bestandteils eines Brennmittels.

Es ist bekannt, Verfahren zur Abgasnachbehandlung in industriellen Anlagen, insbesondere in Kraftwerken, und/oder in Kraftfahrzeugen, insbesondere in Kraftfahrzeugen mit einem Verbrennungsmotor, einzusetzen. Eine Nachbehandlung eines Abgases, das bei einem Betrieb einer industriellen Anlage oder eines Kraftfahrzeugs entsteht, kann z.B. dann notwendig sein, wenn gesetzlich vorgeschriebene Emissions-/Abgasnormen eingehalten werden müssen.

Emissions-/Abgasnormen haben den Zweck, Mensch und Umwelt zu schützen. Denn einige der im Abgas enthaltenen Stoffe, insbesondere Stickoxide (NOₓ), können schädliche Auswirkungen auf Mensch und Umwelt haben. Diese Stoffe können z.B. zu einer Reizung bzw. Schädigung von Atmungsorganen führen oder zur Entstehung sauren Regens, zur Smogbildung und/oder zur Verstärkung der Erderwärmung beitragen.

Um eine Anzahl solcher schädlichen Stoffe im Abgas zu reduzieren, ist es bekannt, das Abgas mit einem Reduktionsmittel, wie z.B. Ammoniak (NH₃), zu behandeln/nachzubehandeln. Ein Beispiel für ein Verfahren, bei dem das Abgas mit einem Reduktionsmittel nachbehandelt wird, ist die sogenannte selektive katalytische Reduktion (englisch: selective catalytic reduction, SCR). Insbesondere bei einer Abgasentstickung hat sich die selektive katalytische Reduktion aufgrund ihrer Effizienz gegenüber anderen Verfahren durchgesetzt.

Die Nachbehandlung des Abgases mit einem Reduktionsmittel bringt bisher jedoch auch einige Nachteile mit sich. So ist z.B. ein Speicher für das Reduktionsmittel notwendig. Damit wird zusätzlicher Platz benötigt, was insbesondere bei Kraftfahrzeugen aufgrund ihres begrenzten Platzangebots kritisch ist. Unter Umständen können für das Reduktionsmittel bzw. für einzelne Bestandteile des Reduktionsmittels mehrere Speicher notwendig sein. Dies kann insbesondere dann der Fall sein, wenn einzelne Bestandteile des Reduktionsmittels aufgrund ihrer chemischen Eigenschaften nicht in einem gemeinsamen Speicher gelagert werden können/dürfen.

Außerdem muss ein Zustand, insbesondere ein Füllstand, des Reduktionsmittels bzw. seiner Bestandteile überwacht und bei Bedarf das Reduktionsmittel bzw. einer seiner Bestandteile nachgeliefert oder ausgetauscht werden. Dies geht mit einem gewissen Wartungsaufwand einher.

Je nachdem, was für ein Stoff/Stoffgemisch als Reduktionsmittel verwendet wird, kann das Reduktionsmittel korrosiv/korrosionsfördernd sein, sodass Materialien, die mit dem Reduktionsmittel in Kontakt kommen, korrosionsfrei sein sollten. Solche Materialien können unter Umständen aufwändig herstellbar und/oder teuer sein.

Ferner wird zur Herstellung des Reduktionsmittels Energie benötigt, was mit gewissen Kosten verbunden ist. Je nachdem, welches Herstellungsverfahren zum Einsatz kommt, können bei der Herstellung des Reduktionsmittels CO₂-Emissionen auftreten, die zur Verstärkung der Erderwärmung beitragen.

Aus der DE 10 2007 021 827 A1, der DE 10 2006 000 401 A1, der EP 0 537 968 A1, der DE 10 2011 011 952 A1 und der DE 10 2011 115 300 A1 sind verschiedene Verbrennungssysteme mit einer dortig jeweiligen Abgasnachbehandlung bei einem Abgas des Verbrennungssystems bekannt, wobei das Verbrennungssystem und die Abgasnachbehandlung mit einem Bestandteil des Brennstoffs des Verbrennungssystems betrieben werden.
Ferner ist aus der US 2011/0283959 A1 ein Verbrennungssystem mit einer Brennkammer bekannt, bei dem ein aus der Brennkammer austretendes Abgas mithilfe eines Katalysators nachbehandelt wird. Dieses Verbrennungssystem wird mit Ammoniak als Brennmittelbestandteil betrieben, wobei aus dem in der Brennkammer nicht verbrannten Anteil des Ammoniaks Wasserstoff erzeugt wird, der als weiterer Brennmittelbestandteil in die Brennkammer geleitet wird.
Weiter ist aus der FR 2 941 499 A1 ein Verbrennungssystem bekannt, bei dem Wasserstoff als Brennmittelbestandteil eingesetzt wird und bei dem eine Abgasnachbehandlung mit Wasserstoff durchgeführt wird, wobei der Wasserstoff mittels einer Wasserelektrolyse aus Wasser hergestellt wird.

Eine Aufgabe der Erfindung ist, ein Verfahren sowie ein Verbrennungssystem für eine aufwands-/kostengünstige Abgasnachbehandlung anzugeben.
Diese Aufgabe wird erfindungsgemäß durch ein Verfahren zur Abgasnachbehandlung, durch ein Verbrennungssystem zur Durchführung des Verfahrens mit den Merkmalen gemäß den jeweiligen unabhängigen Ansprüchen gelöst. Vorteilhafte Ausgestaltungen/Weiterbildungen sind Gegenstand der abhängigen Ansprüche sowie der nachfolgenden Beschreibung und können sich sowohl auf das Verfahren als auch auf das Verbrennungssystem und/oder auf die Verwendung beziehen.

Das erfindungsgemäße Verfahren sieht vor, dass ein nachzubehandelndes Abgas, das bei einer Verbrennung eines Brennmittels entsteht, mit einem Reduktionsmittel behandelt wird. Dabei wird ein Bestandteil des Brennmittels auch als ein Bestandteil des Reduktionsmittels verwendet. Das Brennmittel und das Reduktionsmittel weisen also einen gemeinsamen Bestandteil/Stoff auf. Weiterhin können das Brennmittel und das Reduktionsmittel mehrere gemeinsame Bestandteile/Stoffe aufweisen.

Als Reduktionsmittel kann ein Stoff/Stoffgemisch aufgefasst werden, der/das andere Stoffe reduzieren kann und damit selbst oxidiert wird. Ferner kann als Brennmittel ein Stoff/Stoffgemisch aufgefasst werden, dessen chemische Energie sich durch Verbrennung in nutzbare Energie, z.B. Wärmeenergie, umwandeln lässt. Unter einem Abgas kann ein bei einem Stoffumwandlungsprozess, wie z.B. einer Verbrennung eines Brennmittels, entstehendes, meist beim Stoffumwandlungsprozess nicht mehr nutzbares Gas/Gasgemisch verstanden werden.

Unter einem Bestandteil des Brenn-/Reduktionsmittels kann ein im Brenn-/Reduktionsmittel enthaltener Stoff verstanden werden. Das Brenn-/Reduktionsmittel kann jeweils einen einzigen Bestandteil/Stoff oder eine Mehrzahl von Bestandteilen/Stoffen aufweisen.

Die Erfindung geht von der Überlegung aus, dass durch die Verwendung eines Bestandteils des Brennmittels als ein Bestandteil des Reduktionsmittels auf einen eigenen Speicher für den Bestandteil des Reduktionsmittels verzichtet werden kann. Folglich können ein zusätzlicher Platzbedarf und zusätzliche Kosten für einen solchen Speicher vermieden werden.

Ferner geht die Erfindung von der Überlegung aus, dass ein Aufwand für ein Überwachen, Nachliefern und/oder Austauschen eines Bestandteils des Reduktionsmittels in dem Fall, in dem der Bestandteil des Reduktionsmittels auch ein Bestandteil des Brennmittels ist, geringer ist als in dem Fall, in dem dies nicht so ist. Denn im erstgenannten Fall wird der Bestandteil des Reduktionsmittels ohnehin schon als ein Bestandteil des Brennmittels überwacht, nachgeliefert und/oder ausgetauscht. Jedoch muss dann, wenn der Bestandteil des Reduktionsmittels kein Bestandteil des Brennmittels ist, der Bestandteil des Reduktionsmittels als separates Betriebsmittel überwacht, nachgeliefert und/oder ausgetauscht werden, was mit einem größeren Wartungsaufwand einher geht.

Außerdem benötigen Elemente zum Speichern und/oder Leiten des Bestandteils des Reduktionsmittels keine anderen (unter Umständen teuren oder aufwendig herstellbaren) Materialien als solche Materialien, die ohnehin schon für den Bestandteil des Brennmittels hergestellt/verwendet werden.

Weiterhin ermöglicht die Verwendung eines Bestandteils des Brennmittels als ein Bestandteil des Reduktionsmittels, Energie zu sparen und/oder CO₂-Emissionen zu verringern. Dies ist z.B. dann möglich, wenn ein Anteil eines Bestandteils des Reduktionsmittels, dessen Herstellung mehr Energie benötigt und/oder mehr CO₂-Emissionen hervorruft als eine Herstellung des Bestandteils des Brennmittels, reduziert werden kann.

Unter Umständen verbrennt der Bestandteil des Brennmittels unvollständig, das heißt, unter Umständen verbrennt nur eine Teilmenge des Bestandteils des Brennmittels bei der Verbrennung. Eine restliche (unverbrannte) Menge des Bestandteils des Brennmittels kann zusammen mit dem Abgas abtransportiert werden. Vorteilhafterweise wird die unverbrannte Menge des Bestandteils des Brennmittels als Bestandteil des Reduktionsmittels verwendet. Dabei kann die gesamte unverbrannte Menge oder ein Teil der unverbrannten Menge als Bestandteil des Reduktionsmittels verwendet werden. Dies ermöglicht eine effiziente/ökonomische Nutzung des Bestandteils des Brennmittels, da der Bestandteil des Brennmittels auf diese Weise nicht ungenutzt (mit dem Abgas) ausgestoßen wird.

Der Bestandteil des Brennmittels, der auch als ein Bestandteil des Reduktionsmittels verwendet wird, ist Wasserstoff (H₂). Wasserstoff kann aufwandsgünstig hergestellt und/oder gespeichert werden. Dabei können bekannte, ausgereifte Technologien zur Wasserstoffherstellung, zur Wasserstoffspeicherung und/oder bestehende Infrastruktur zur Wasserstoffversorgung zum Einsatz kommen. Ein Vorteil des Wasserstoffs ist, dass er sich mit einer geringeren CO₂-Emission als andere Reduktionsmittel bzw. Reduktionsmittelbestandteile, wie z.B. Ammoniak, herstellen lässt.

Das Brennmittel kann ein Gasgemisch sein, insbesondere ein Gemisch aus Wasserstoff und einem Kohlenwasserstoffgas, wie z.B. Methan (CH₄). Dabei kann der Wasserstoff einen größeren oder einen kleineren Anteil an einer Zusammensetzung des Gasgemischs aufweisen als ein anderer Bestandteil/Stoff des Gasgemischs.

Das Reduktionsmittel ist ein Gemisch aus Wasserstoff und Ammoniak. Dadurch kann ein Stoffumsatz bei einer Reduktion, insbesondere der Stoffumsatz bei einer Entstickung des Abgases, gegenüber einer alleinigen Verwendung von Wasserstoff als Reduktionsmittel erhöht werden. Als Stoffumsatz kann ein Anteil einer umgesetzten bzw. chemisch umgewandelten Menge eines Stoffs bezogen auf eine Ausgangsmenge des Stoffs verstanden werden. Zusätzlich zum Ammoniak kann das Gasgemisch auch Harnstoff aufweisen.

Weiterhin kann das Gasgemisch aus Wasserstoff und Ammoniak ein Wasserstoff-zu-Ammoniak-Verhältnis gleich 1 oder kleiner als 1 aufweisen. Unter dem Wasserstoff-zu-Ammoniak-Verhältnis kann ein Verhältnis aus einer Wasserstoffzahl im Reduktionsmittel zu einer Ammoniakteilchenzahl im Reduktionsmittel verstanden werden.

Zweckmäßigerweise wird das nachzubehandelnde Abgas unter Verwendung des Reduktionsmittels reduziert. In bevorzugter Weise wird das nachzubehandelnde Abgas unter Verwendung des Reduktionsmittels sowie eines Katalysators selektiv katalytisch reduziert. Durch die Verwendung des Katalysators lässt sich eine Reaktionsgeschwindigkeit der Reduktion erhöhen und/oder eine für die Reduktion benötigte Reaktionstemperatur senken. Selektiv kann in diesem Zusammenhang bedeuten, dass vorgegebene Stoffe bevorzugt reduziert werden, während eine Reduktion anderer als der vorgegebenen Stoffe weitgehend ausbleibt. Das heißt, unerwünschte Nebenreaktionen können weitgehend unterdrückt werden.

Des Weiteren kann das Abgas Stickoxide aufweisen. Zweckmäßigerweise erfolgt bei der Abgasnachbehandlung eine Abgasentstickung (ein DeNOx-Prozess). Das heißt, zweckmäßigerweise wird eine Anzahl der im Abgas enthaltenen Stickoxide unter Ablauf einer Reduktionsreaktion verringert, insbesondere unter Verwendung des Reduktionsmittels. Das Abgas kann verschiedene Sorten von Stickoxiden aufweisen, insbesondere Stickoxide mit unterschiedlichen Oxidationsstufen. Darunter können z.B. Stickstoffmonoxid (NO) oder Stickstoffdioxid (NO₂) sein. Darüber hinaus kann das Abgas weitere Stoffe aufweisen, insbesondere weitere Oxide, wie z.B. Schwefeldioxid (SO₂). Vorzugsweise wird zumindest eine der im Abgas enthaltenen Stickoxid-Sorten reduziert, während unterwünschte Nebenreaktionen, wie z.B. eine Oxidation von Schwefeldioxid zu Schwefeltrioxid (SO₃), weitgehend ausbleiben. In besonders bevorzugter Weise werden mehrere oder alle der im Abgas enthaltenen Stickoxid-Sorten reduziert, während unerwünschte Nebenreaktionen weitgehend ausbleiben.

In einer vorteilhaften Ausgestaltung werden der Bestandteil des Brennmittels und der Bestandteil des Reduktionsmittels aus einem gemeinsamen Speicher zur Verfügung gestellt.

Vorteilhafterweise wird der Bestandteil des Brennmittels, der auch als ein Bestandteil des Reduktionsmittels verwendet wird, mittels einer Elektrolyse hergestellt.

Ferner kann bei der Herstellung des Bestandteils des Brennmittels, der auch als ein Bestandteil des Reduktionsmittels verwendet wird, erneuerbare Energie, insbesondere Windenergie und/oder Solarenergie zum Einsatz kommen. Dies ermöglicht eine CO₂-arme/CO₂-neutrale Herstellung des Bestandteils des Brenn-/Reduktionsmittels.

Es ist zweckmäßig, wenn elektrische Energie/Spannung, die bei der Elektrolyse zum Einsatz kommt, aus erneuerbarer Energie, insbesondere aus Windenergie und/oder aus Solarenergie, gewonnen wird.

Der Bestandteil des Brennmittels, der auch als ein Bestandteil des Reduktionsmittels verwendet wird, wird aus Wasser hergestellt, insbesondere mittels einer Wasserelektrolyse. Ferner ist eine Herstellung des Wasserstoffs aus Wasser mittels thermischer Dissoziation möglich, z.B. unter Verwendung eines Solarturmkraftwerks.

Das erfindungsgemäße Verbrennungssystem weist eine Brennkammer auf, in der das Brennmittel verbrennbar ist. Außerdem weist das Verbrennungssystem einen Speicher auf, aus dem die Brennkammer mit dem Bestandteil des Brennmittels versorgbar ist. Des Weiteren umfasst das Verbrennungssystem eine Reduktionskammer, die aus dem Speicher mit dem Bestandteil des Brennmittels versorgbar ist.

Ein bereits vorhandener, zur Speicherung des Bestandteils des Brennmittels vorgesehener Speicher, kann somit sowohl zur Versorgung der Brennkammer als auch der Reduktionskammer mit dem Bestandteil des Brennmittels verwendet werden. Dabei kann der Bestandteil des Brennmittels unmittelbar, insbesondere separat, oder mittelbar, insbesondere nach vorheriger Beimischung eines anderen Bestandteils des Brennmittels oder eines Reduktionsmittels bzw. nach vorheriger Beimischung zu einem anderen Bestandteil des Brenn- oder Reduktionsmittels, in die Brenn-/Reduktionskammer eingeleitet werden. Dadurch wird auf einfache Weise ermöglicht, den Bestandteil des Brennmittels auch als ein Bestandteil des Reduktionsmittels zu verwenden.

Unter einem Verbrennungssystem kann vorliegend ein System zum Verbrennen eines Brennmittels, insbesondere zum Zwecke einer Wärmeerzeugung und/oder einer Verrichtung mechanischer Arbeit, verstanden werden.

Weiterhin kann unter einer Reduktionskammer eine Kammer/ein Gefäß zur Reduktion eines Stoffes/Stoffgemischs, insbesondere eines Abgases, verstanden werden. Zweckmäßigerweise ist die Reduktionskammer mit mehreren Öffnungen ausgestattet. Eine der Öffnung kann zum Einleiten des Reduktionsmittels vorgesehen sein. Eine andere der Öffnungen kann zum Einleiten des zu reduzierenden Stoffes/Stoffgemischs vorgesehen sein. Darüber hinaus kann eine weitere der Öffnungen zum Ableiten von Reduktionsprodukten vorgesehen sein. Die letztgenannte Öffnung kann außerdem dazu dienen, eine Menge des zu reduzierenden Stoffes/Stoffgemischs, die bei einer unvollständigen Reduktion zurückbleibt, abzuleiten.

Als Brennkammer kann eine Kammer/ein Gefäß zum Verbrennen eines Brennmittels aufgefasst werden. Zweckmäßigerweise ist die Brennkammer mit mehreren Öffnungen ausgestattet. Eine der Öffnungen kann zum Einleiten eines Brennmittels vorgesehen sein. Eine andere der Öffnungen kann zum Einleiten eines Oxidationsmittels, wie z.B. Sauerstoff, vorgesehen sein. Unter einem Oxidationsmittel kann ein Stoff/Stoffgemisch verstanden werden, der/das andere Stoff oxidieren kann und dabei selbst reduziert wird. Eine weitere der Öffnungen der Brennkammer kann zum Ableiten von Verbrennungsprodukten, insbesondere zum Ableiten des Abgases, das bei Verbrennung des Brennmittels entsteht, vorgesehen sein. Das Brennmittel kann einen einzigen Bestandteil/Stoff oder eine Mehrzahl von Bestandteilen/Stoffen aufweisen.

Zweckmäßigerweise ist eine Versorgungsleitung vorgesehen, mittels der die Brennkammer mit dem Speicher verbunden ist. Weiter ist es zweckmäßig, wenn eine Versorgungsleitung vorgesehen ist, mittels der die Reduktionskammer mit dem Speicher verbunden ist. Der Speicher kann ein Kavernenspeicher, ein Druckbehälter oder ein Flüssiggastank sein.

In bevorzugter Weise sind die Brennkammer und die Reduktionskammer aus dem Speicher mit Wasserstoff versorgbar.

Das Verbrennungssystem kann eine Verbrennungskraftmaschine, insbesondere eine Gasturbine oder ein Verbrennungsmotor, umfassen. Besagte Brennkammer kann ein Bestandteil dieser Verbrennungskraftmaschine sein.

Mit der Gasturbine ist hier eine Gasturbine "im weiteren Sinne" gemeint. Die Gasturbine kann einen Expander (Gasturbine "im engeren Sinne") umfassen. Außerdem kann die Gasturbine einen Verdichter umfassen, der vor dem Expander angeordnet ist, bezogen auf eine Strömungsrichtung eines die Gasturbine durchströmbaren Fluids. Die Brennkammer ist zweckmäßigerweise zwischen dem Expander und dem Verdichter angeordnet.
Vorteilhafterweise ist in der Reduktionskammer ein Katalysator zur Durchführung einer selektiven katalytischen Reduktion angeordnet. Es ist zweckmäßig, wenn der Katalysator eine katalytisch aktive Schicht aufweist. Die katalytisch aktive Schicht kann auf einem Träger, insbesondere aus Keramik oder Metall, angeordnet sein. Vorzugsweise umfasst der Katalysator zumindest ein Edelmetall als ein Material, wie z.B. Platin (Pt), Palladium (Pd), Silber (Ag) und/oder Rhodium (Rh). In besonders bevorzugter Weise umfasst die katalytisch aktive Schicht das zumindest eine Edelmetall als ein Material.
Zweckmäßigerweise ist das Verbrennungssystem mit einem Elektrolyseur ausgestattet. Weiter ist es zweckmäßig, wenn der Elektrolyseur zur Erzeugung des Bestandteils des Brennmittels, mit dem die Reduktionskammer versorgbar ist, vorbereitet ist. Sinnvollerweise ist der Elektrolyseur mittels einer Versorgungsleitung mit dem Speicher verbunden. Der Elektrolyseur kann u.a. über eine Windenergieanlage, eine Photovoltaikanlage oder ein Wasserkraftwerk mit elektrischer Energie/Spannung versorgbar sein.

Die Verwendung sieht vor, einen Bestandteil eines Brennmittels zur Nachbehandlung eines Abgases, das bei einer Verbrennung des Brennmittels entsteht, mit einem Reduktionsmittel zu verwenden, wobei der Bestandteil des Brennmittels, der auch als ein Bestandteil des Reduktionsmittels verwendet wird, Wasserstoff ist, welcher aus Wasser hergestellt wird, und das Reduktionsmittel ein Gemisch aus Wasserstoff und Ammoniak ist. Das Brennmittel kann einen einzigen Bestandteil/Stoff oder eine Mehrzahl von Bestandteilen/Stoffen aufweisen.
Weiterhin kann die Nachbehandlung des Abgases eine Abgasentstickung umfassen.

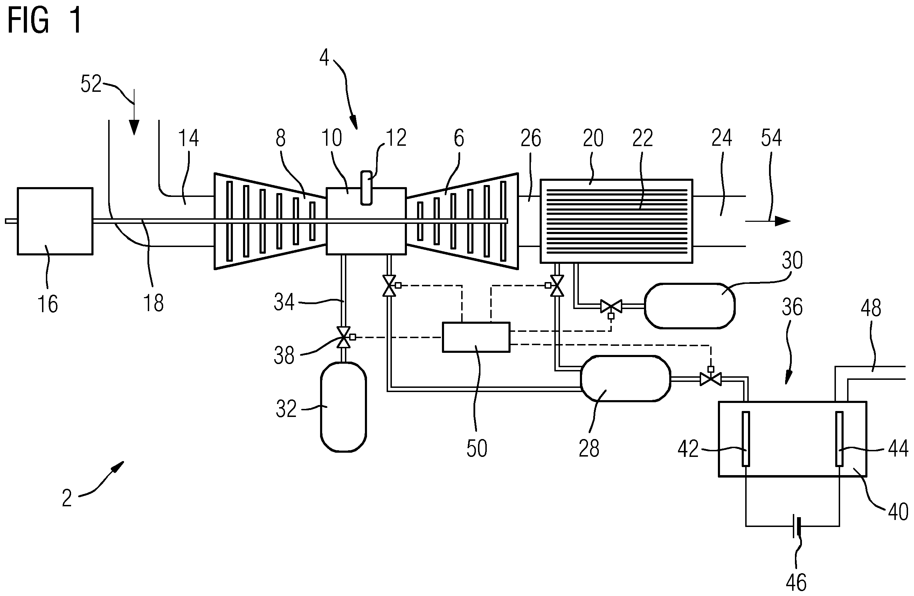

Die bisher gegebene Beschreibung vorteilhafter Ausgestaltung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, dem erfindungsgemäßen Verbrennungssystem und/oder der Verwendung kombinierbar.
Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung des Ausführungsbeispiels, das im Zusammenhang mit FIG 1 näher erläutert wird. Das Ausführungsbeispiel dient der Erläuterung der Erfindung und beschränkt die Erfindung nicht auf die darin angegebene Kombination von Merkmalen, auch nicht in Bezug auf funktionale Merkmale. Außerdem können dazu geeignete Merkmale des Ausführungsbeispiels auch explizit isoliert betrachtet und/oder mit einem beliebigen der Ansprüche kombiniert werden.
Es zeigen:
- FIG 1: ein Verbrennungssystem mit einer Gasturbine und einem Elektrolyseur und
- FIG 2: ein nicht erfindungsgemäßes weiteres Verbrennungssystem mit einem Verbrennungsmotor.
FIG 1 zeigt schematisch ein Verbrennungssystem 2 mit einer Verbrennungskraftmaschine 4. Im vorliegenden Ausführungsbeispiel ist die Verbrennungskraftmaschine 4 als eine Gasturbine ausgebildet.

Die Gasturbine umfasst einen Expander 6 und ein Verdichter 8. Außerdem umfasst die Gasturbine eine Brennkammer 10, die zwischen dem Expander 6 und dem Verdichter 8 angeordnet ist. Die Brennkammer 10 ist mit mehreren Zündkerzen 12 ausgestattet, von denen in FIG 1 exemplarisch eine dargestellt ist.

Weiterhin weist das Verbrennungssystem 2 eine Lufteinlassleitung 14 auf, die mit dem Verdichter 8 verbunden ist. Durch die Lufteinlassleitung 14 ist Luft in die Gasturbine, insbesondere in den Verdichter 8, einleitbar.

Außerdem weist das Verbrennungssystem 2 einen Generator 16 auf. Der Generator 16 und die Gasturbine weisen eine gemeinsame Welle 18 auf, mittels welcher der Generator 16 antreibbar ist.

Ferner ist beim Verbrennungssystem 2 eine Reduktionskammer 20 vorgesehen, in welcher ein Katalysator 22 angeordnet ist. Der Katalysator 22 weist einen Träger aus Keramik auf, auf dem eine katalytisch aktive Schicht angeordnet ist, die aus einem Edelmetall, wie z.B. Platin, besteht (in FIG 1 nicht dargestellt) .

Die Reduktionskammer 20 ist mit einer Abgasauslassleitung 24 verbunden, durch die ein Gas/Gasgemisch, insbesondere ein Abgas, ableitbar ist. Des Weiteren ist die Reduktionskammer 20 über eine Verbindungsleitung 26 mit der Gasturbine, insbesondere mit dem Expander 6, verbunden.

Weiterhin umfasst das Verbrennungssystem 2 einen Speicher 28 für Wasserstoff, einen Speicher 30 für eine Ammoniaklösung und einen Speicher 32 für Methan. Die Speicher 28, 30, 32 sind jeweils als Druckbehälter ausgebildet.

Darüber hinaus ist der Speicher 32 für Methan über eine Versorgungsleitung 34 mit der Brennkammer 10 verbunden. Der Speicher 30 für die Ammoniaklösung ist über eine weitere Versorgungsleitung 34 mit der Reduktionskammer 20 verbunden. Außerdem ist der Speicher 28 für Wasserstoff über eine erste Versorgungsleitung 34 mit der Brennkammer 10 verbunden, über eine zweite Versorgungsleitung 34 mit der Reduktionskammer 20 verbunden und über eine dritte Versorgungsleitung 34 mit einem Elektrolyseur 36 verbunden. Die zuvor erwähnten Versorgungsleitungen 34 sind jeweils mit einem elektrisch steuerbaren Ventil 38 ausgestattet.

Der Elektrolyseur 36 umfasst ein Elektrolysegefäß 40 sowie zwei in dem Elektrolysegefäß angeordnete Elektroden, eine Anode 42 und eine Katode 44. Die Anode 42 und die Katode 44 sind mit einer Gleichspannungsquelle 46 verbunden. Ferner weist der Elektrolyseur 36 eine Wassereinlassleitung 48 auf.

Das Verbrennungssystem 2 ist außerdem mit einer Kontrolleinheit 50 ausgestattet, mittels der die Ventile 38 der Versorgungsleitungen 34 steuerbar sind.

Durch die Lufteinlassleitung 14 wird Luft in die Gasturbine, insbesondere in den Verdichter 8 eingeleitet. Eine Einströmrichtung 52 der Luft ist in FIG 1 mit einem Pfeil dargestellt.

Im Verdichter 8 wird die Luft verdichtet/komprimiert, wobei eine Temperatur der Luft zunimmt. Die erhitzte, komprimierte Luft strömt in die Brennkammer 10, wo ihr ein Brennmittel zugeführt wird.

Im vorliegenden Ausführungsbeispiel ist das Brennmittel ein Gasgemisch mit zwei Bestandteilen, Methan und Wasserstoff. Das Methan wird aus dem Speicher 32 für Methan in die Brennkammer 10 eingeleitet. Entsprechend wird der Wasserstoff aus dem Speicher 28 für Wasserstoff in die Brennkammer 10 eingeleitet.

Ein Gemisch aus dem Brennmittel und der Luft (Brennmittel-Luft-Gemisch) wird mittels der Zündkerzen 12 gezündet. Anschließend verbrennt das Brennmittel mit Sauerstoff aus der Luft führt. Dabei entsteht ein heißes Abgas, das u.a. Schwefeldioxid sowie verschiedene Stickoxide aufweist. Aufgrund der bei der Verbrennung entstehenden Wärme dehnt sich das Abgas aus.

Das sich ausdehnende Abgas strömt in den Expander 6 und treibt diesen an. Über die gemeinsame Welle 18 treibt der Expander 6 den Generator 16 an.

Anschließend strömt das Abgas über die Verbindungsleitung 26 in die Reduktionskammer 20. Dort wird das Abgas mit einem Reduktionsmittel behandelt/nachbehandelt.

Im vorliegenden Ausführungsbeispiel ist das Reduktionsmittel ein weiteres Gasgemisch mit zwei Bestandteilen, Wasserstoff und Ammoniak. Also wird der Wasserstoff sowohl als ein Bestandteil des Brennmittels als auch als ein Bestandteil des Reduktionsmittels verwendet. Das Ammoniak wird aus dem Speicher 30 für Ammoniak in die Reduktionskammer 20 eingeleitet. Entsprechend wird der Wasserstoff aus dem Speicher 28 für Wasserstoff in die Reduktionskammer 20 eingeleitet.

Dabei ist das Wasserstoff-zu-Ammoniak-Verhältnis des weiteren Gasgemischs gleich 0,5. Das heißt, eine Teilchenzahl des Ammoniaks im Reduktionsmittel ist doppelt so groß wie eine Teilchenzahl des Wasserstoffs im Reduktionsmittel.

Bei der Nachbehandlung des Abgases wird dieses unter Verwendung des Reduktionsmittels und des Katalysators 22 selektiv katalytisch reduziert. In erster Linie werden Stickoxide reduziert, während unerwünschte Nebenreaktionen, wie z.B. eine Oxidation von Schwefeldioxid zu Schwefeltrioxid, ausbleiben. Das heißt, das Abgas wird entstickt.

Nach seiner Nachbehandlung strömt das Abgas über die Abgasauslassleitung 24 aus der Reduktionskammer 20 heraus. Eine Ausströmrichtung 54 des Abgases ist in FIG 1 mit einem Pfeil dargestellt. Der Wasserstoff, der als ein Bestandteil des Brenn-/Reduktionsmittels zum Einsatz kommt, wird aus Wasser hergestellt. Die Herstellung des Wasserstoffs erfolgt dabei mithilfe des Elektrolyseurs 36. Dazu wird Wasser (unter Zugabe von Säure oder Lauge) über die Wassereinlassleitung 48 in das Elektrolysegefäß 40 des Elektrolyseurs 36 eingeleitet.

Im Elektrolyseur 36 läuft eine Elektrolyse ab, bei der das eingeleitete Wasser mithilfe der Gleichspannungsquelle 46 in Wasserstoff und Sauerstoff zerlegt wird (Wasserelektrolyse). Die Gleichspannungsquelle 46 nutzt für die Elektrolyse Energiespitzen, die bei einer Stromerzeugung aus erneuerbaren Energien, wie z.B. Windenergie oder Solarenergie, entstehen. Der auf diese Weise gewonnene Wasserstoff wird über die Versorgungsleitung 34, die den Elektrolyseur 36 mit dem Speicher 28 für Wasserstoff verbindet, in besagten Speicher 28 eingeleitet, sodass dieser (wieder) aufgefüllt wird.

Die nachfolgende Beschreibung beschränkt sich im Wesentlichen auf die Unterschiede zum vorhergehenden Ausführungsbeispiel, auf das bezüglich gleichbleibender Merkmale und Funktionen verwiesen wird. Im Wesentlichen gleiche bzw. einander entsprechende Elemente sind grundsätzlich mit den gleichen Bezugszeichen bezeichnet.

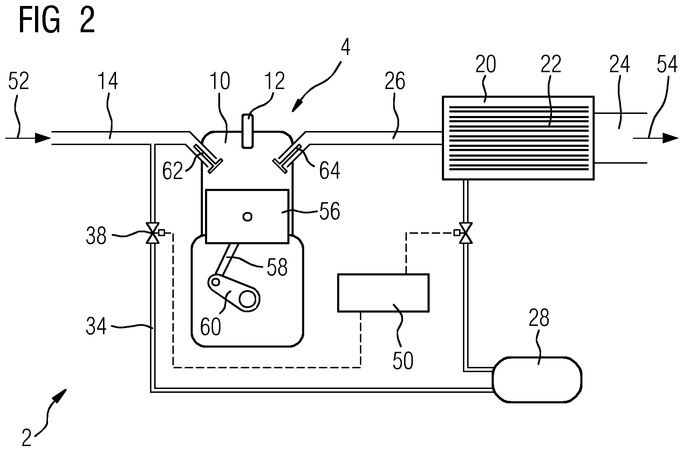

FIG 2 zeigt schematisch ein nicht erfindungsgemäßes weiteres Verbrennungssystem 2 mit einer Verbrennungskraftmaschine 4. Im vorliegenden Fall ist die Verbrennungskraftmaschine 4 als ein Verbrennungsmotor, insbesondere als ein Wasserstoffverbrennungsmotor, ausgebildet.

Der Verbrennungsmotor umfasst eine Brennkammer 10, in der mehrere Zündkerzen 12 angeordnet sind. In FIG 2 ist eine der Zündkerzen 12 exemplarisch dargestellt.

Außerdem weist der Verbrennungsmotor einen Kolben 56 auf. Das heißt, der Verbrennungsmotor ist ein Kolbenmotor. Ferner weist der Verbrennungsmotor eine Pleuelstange 58 auf, die mit dem Kolben 56 sowie mit einer Kurbelwelle 60 verbunden ist. Die Kurbelwelle 60 ist mittels des Kolbens 56 und der Pleuelstange 58 antreibbar.

Des Weiteren umfasst das Verbrennungssystem 2 eine Lufteinlassleitung 14 mit einem Einlassventil 62. Mithilfe des Einlassventils 62 ist ein Einleiten eines Gases/Gasgemischs, insbesondere eines Brennmittel-Luft-Gemischs, in die Brennkammer 10 kontrollierbar. Darüber hinaus umfasst das Verbrennungssystem 2 eine Verbindungsleitung 26, durch die die Brennkammer 10 mit einer Reduktionskammer 20 verbunden ist. Die Verbindungsleitung 26 ist mit einem Auslassventil 64 ausgestattet. Mithilfe des Auslassventils 64 ist ein Ausleiten eines Gases/Gasgemischs, insbesondere eines Abgases, kontrollierbar.

Weiterhin umfasst das Verbrennungssystem 2 einen Speicher 28 für Wasserstoff. Dieser Speicher 28 ist über eine erste Verbindungsleitung 34 mit der Lufteinlassleitung 14 verbunden, insbesondere eingangsseitig des Einlassventils 62. Die Brennkammer 10 ist also über die Lufteinlassleitung 14 mit Luft und zusätzlich mit Wasserstoff versorgbar. Besagter Speicher 28 ist über eine zweite Verbindungsleitung 34 mit der Reduktionskammer 20 verbunden.

In einem geöffneten Zustand des Einlassventils 62 wird das Brennmittel-Luft-Gemisch in die Brennkammer 10 eingeleitet. Das Brennmittel-Luft-Gemisch wird dabei mithilfe des Kolbens 56 angesaugt, während sich der Kolben 56 vom Einlassventil 62 bzw. Auslassventil 64 wegbewegt (zeichnungsgemäß nach unten). Das Auslassventil 64 ist hierbei geschlossen.

Die Luft des Brennmittel-Luft-Gemischs strömt durch die Lufteinlassleitung 14 in die Brennkammer 10 ein. Eine Einströmrichtung 52 der Luft ist in FIG 2 mit einem Pfeil dargestellt. Während ihrer Strömung durch die Lufteinlassleitung 14 wird der Luft gasförmiger Wasserstoff als Brennmittel beigemischt, welcher aus dem Speicher 28 in die Lufteinlassleitung 14 eingeleitet wird. Im vorliegenden Ausführungsbeispiel weist das Brennmittel einen einzigen Bestandteil auf, nämlich den gasförmigen Wasserstoff.

Als nächstes wird auch das Einlassventil 62 geschlossen. Der Kolben 56 bewegt sich zum Einlassventil 62 bzw. Auslassventil 64 hin (zeichnungsgemäß nach oben) und verdichtet/komprimiert dabei das Brennmittel-Luft-Gemisch, wobei eine Temperatur des Brennmittel-Luft-Gemischs zunimmt.

Das Brennmittel-Luft-Gemisch wird mithilfe der Zündkerzen 12 gezündet. Anschließend verbrennt das Brennmittel mit Sauerstoff aus der Luft. Dabei entsteht ein heißes Abgas. Aufgrund der bei der Verbrennung entstehenden Wärme dehnt sich das Abgas aus, sodass sich der Kolben 56 wieder vom Einlassventil 62 bzw. Auslassventil 64 wegbewegt. Das Abgas verrichtet also Arbeit am Kolben 56.

Anschließend wird das Auslassventil 64 geöffnet. Der Kolben bewegt sich wieder zum Einlassventil 62 bzw. Auslassventil 64 hin und drückt das Abgas aus der Brennkammer 10.

Das Abgas strömt über die Verbindungsleitung 26 in die Reduktionskammer 20. Dort wird das Abgas mit dem Reduktionsmittel behandelt/nachbehandelt, insbesondere mittels eines Katalysators 22 selektiv katalytisch reduziert und dadurch entstickt.

Im vorliegenden Fall weist das Reduktionsmittel einen einzigen Bestandteil auf, nämlich den gasförmigen Wasserstoff. Also wird der Wasserstoff sowohl als ein Bestandteil des Brennmittels als auch als ein Bestandteil des Reduktionsmittels verwendet. Der Wasserstoff wird hierbei aus dem Speicher 28 in die Reduktionskammer 20 eingeleitet.

Nach seiner Nachbehandlung strömt das Abgas über die Abgasauslassleitung 24 aus der Reduktionskammer 20. Eine Ausströmrichtung 54 des Abgases ist in FIG 2 mit einem Pfeil dargestellt.

Danach wird das Einlassventil 62 geöffnet und das Auslassventil geschlossen 64. Von da an beginnt der zuvor beschriebene Vorgang erneut.

Durch eine periodische Bewegung des Kolbens 56 beim beschriebenen Vorgang wird die Kurbelwelle 60 angetrieben. Mithilfe der Pleuelstange 58 erfolgt dabei eine Energieübertragung vom Kolben 56 auf die Kurbelwelle 60.

Obwohl die Erfindung im Detail durch das bevorzugte, im Zusammenhang mit FIG 1 diskutierte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

## Patentansprüche

1. Verfahren zur Abgasnachbehandlung, bei dem ein nachzubehandelndes Abgas, das bei einer Verbrennung eines Brennmittels entsteht, mit einem Reduktionsmittel behandelt wird, wobei ein Bestandteil des Brennmittels auch als ein Bestandteil des Reduktionsmittels verwendet wird, wobei der Bestandteil des Brennmittels, der auch als ein Bestandteil des Reduktionsmittels verwendet wird, Wasserstoff ist, welcher aus Wasser hergestellt wird, und das Reduktionsmittel ein Gemisch aus Wasserstoff und Ammoniak ist, wobei das Brennmittel ein Gasgemisch aus Wasserstoff und einem Kohlenwasserstoffgas ist.

2. Verfahren nach Anspruch 1,
**dadurch gekennzeichnet, dass** das Gasgemisch aus Wasserstoff und Ammoniak ein Wasserstoff-zu-Ammoniak-Verhältnis gleich 1 oder kleiner als 1 aufweist.

3. Verfahren nach einem der vorhergehenden Ansprüche,
**dadurch gekennzeichnet, dass** das nachzubehandelnde Abgas unter Verwendung des Reduktionsmittels reduziert wird, insbesondere unter Verwendung des Reduktionsmittels sowie eines Katalysators (22) selektiv katalytisch reduziert wird.

4. Verfahren nach einem der vorhergehenden Ansprüche,
**dadurch gekennzeichnet, dass** das Abgas Stickoxide aufweist und bei der Abgasnachbehandlung eine Abgasentstickung erfolgt.

5. Verfahren nach einem der vorhergehenden Ansprüche,
**dadurch gekennzeichnet, dass** der Bestandteil des Brennmittels und der Bestandteil des Reduktionsmittels aus einem gemeinsamen Speicher (28) zur Verfügung gestellt werden.

6. Verfahren nach einem der vorhergehenden Ansprüche,
**dadurch gekennzeichnet, dass** der Bestandteil des Brennmittels, der auch als ein Bestandteil des Reduktionsmittels verwendet wird, mittels einer Elektrolyse hergestellt wird.

7. Verbrennungssystem (2) eingerichtet zur Durchführung eines Verfahrens nach einem der vorhergehenden Ansprüche, mit einer Brennkammer (10), in der das Brennmittel verbrennbar ist, einem Speicher (28), aus dem die Brennkammer (10) mit dem Bestandteil des Brennmittels versorgbar ist, sowie einer Reduktionskammer (20),
wobei, die Reduktionskammer (20) aus dem Speicher (28) mit dem Bestandteil des Brennmittels versorgbar ist, **gekennzeichnet durch** eine Verbrennungskraftmaschine (4), die eine Gasturbine ist, wobei die Brennkammer (10) ein Bestandteil der Verbrennungskraftmaschine (4) ist.

8. Verbrennungssystem (2) nach Anspruch 7,
**dadurch gekennzeichnet, dass** in der Reduktionskammer (20) ein Katalysator (22) zur Durchführung einer selektiven katalytischen Reduktion angeordnet ist.

9. Verbrennungssystem (2) nach einem der Ansprüche 7 oder 8, **gekennzeichnet durch** einen Elektrolyseur (36), welcher zur Erzeugung des Bestandteils des Brennmittels vorbereitet ist.

## Claims

1. Method for exhaust gas aftertreatment, in which an exhaust gas to be aftertreated, which is produced during combustion of a fuel, is treated with a reducing agent, wherein a constituent of the fuel is also used as a constituent of the reducing agent, wherein the constituent of the fuel which is also used as a constituent of the reducing agent is hydrogen, which is produced from water, and the reducing agent is a mixture of hydrogen and ammonia, wherein the fuel is a gas mixture of hydrogen and a hydrocarbon gas.

2. Method according to claim 1, **characterised in that** the gas mixture of hydrogen and ammonia has a hydrogen-to-ammonia ratio equal to 1 or less than 1.

3. Method according to one of the preceding claims, **characterised in that** the exhaust gas to be aftertreated is reduced using the reducing agent, in particular is selectively catalytically reduced using the reducing agent and a catalyst (22) .

4. Method according to one of the preceding claims, **characterised in that** the exhaust gas comprises nitrogen oxides and during the exhaust gas aftertreatment, an exhaust gas denitrification takes place.

5. Method according to one of the preceding claims, **characterised in that** the constituent of the fuel and the constituent of the reducing agent are made available from a common store (28).

6. Method according to one of the preceding claims, **characterised in that** the constituent of the fuel which is also used as a constituent of the reducing agent is produced by means of an electrolysis.

7. Combustion system (2) configured for carrying out a method according to one of the preceding claims, having a combustion chamber (10) in which the fuel is combustible, a store (28) from which the combustion chamber (10) can be supplied with the constituent of the fuel, and a reducing chamber (20), wherein the reducing chamber (20) can be supplied with the constituent of the fuel from the store (28),
**characterised by** an internal combustion machine (4), which is a gas turbine, wherein the combustion chamber (10) is a component of the internal combustion machine (4).

8. Combustion system (2) according to claim 7,
**characterised in that** a catalyst (22) for carrying out a selective catalytic reduction is arranged in the reducing chamber (20).

9. Combustion system (2) according to one of claims 7 or 8, **characterised by** an electrolyser (36) which is configured for producing the constituent of the fuel.

## Revendications

1. Procédé de post-traitement de gaz brûlé, dans lequel on traite, par un agent réducteur, un gaz brûlé à post-traiter, qui se crée à la combustion d'un agent de combustion, dans lequel on utilise un constituant de l'agent de combustion également comme constituant de l'agent réducteur, dans lequel le constituant de l'agent de combustion, qui est utilisé aussi comme constituant de l'agent réducteur, est l'hydrogène, qui est produit à partir d'eau, et l'agent réducteur est un mélange d'hydrogène et d'ammoniac, l'agent de combustion étant un mélange d'hydrogène et d'un hydrocarbure gazeux.

2. Procédé suivant la revendication 1,
**caractérisé en ce que** le mélange gazeux d'hydrogène et d'ammoniac a un rapport de l'hydrogène à l'ammoniac égal à 1 ou plus petit que 1.

3. Procédé suivant l'une des revendications précédentes, **caractérisé en ce que** l'on réduit le gaz brûlé à post-traiter, en utilisant l'agent réducteur, notamment en effectuant une réduction catalytique sélective, en utilisant l'agent réducteur ainsi qu'un lit catalytique (22).

4. Procédé suivant l'une des revendications précédentes, **caractérisé en ce que** le gaz brûlé a des oxydes d'azote et, lors du post-traitement du gaz brûlé, il se produit une dénitrification du gaz brûlé.

5. Procédé suivant l'une des revendications précédentes, **caractérisé en ce que** le constituant de l'agent de combustion et le constituant de l'agent réducteur sont mis à disposition à partir d'une source (28) commune.

6. Procédé suivant l'une des revendications précédentes, **caractérisé en ce que** le constituant de l'agent de combustion, que l'on utilise également comme constituant de l'agent réducteur, est produit au moyen d'une électrolyse.

7. Système (2) de combustion conçu pour effectuer un procédé suivant l'une des revendications précédentes, comprenant une chambre de combustion (10), dans laquelle l'agent de combustion peut être brûlé, une source (28), à partir de laquelle la chambre de combustion (10) peut être alimentée en le constituant de l'agent de combustion, ainsi qu'une chambre (20) de réduction,
dans lequel la chambre (20) de réduction peut être alimentée à partir de la source (28) en le constituant de l'agent de combustion,
**caractérisé par** une machine (4) motrice à combustion, qui est une turbine à gaz, la chambre de combustion (10) faisant partie de la machine (4) motrice à combustion.

8. Système (2) de combustion suivant la revendication 7, **caractérisé en ce que**, dans la chambre (20) de réduction, est disposé un lit (22) catalytique pour effectuer une réduction catalytique sélective.

9. Système (2) de combustion suivant l'une des revendications 7 ou 8,
**caractérisé par** un électrolyseur (36), qui est préparé pour produire le constituant de l'agent de combustion.
